# EUROPÄISCHE PATENTSCHRIFT

(11) **EP 2 087 312 B1**
(45) Veröffentlichungstag und Bekanntmachung des Hinweises auf die Patenterteilung: **11.02.2015**
(21) Anmeldenummer: 08749696.4
(22) Anmeldetag: 24.04.2008
(51) Int. Cl.: G01B 11/24, G02B 21/00

(54) **MESSANORDNUNG SOWIE VERFAHREN ZUM DREIDIMENSIONALEN MESSEN EINES OBJEKTS**
MEASURING ARRANGEMENT AND METHOD FOR THE THREE-DIMENSIONAL MEASUREMENT OF AN OBJECT
DISPOSITIF DE MESURE ET PROCÉDÉ DE MESURE TRIDIMENSIONNELLE D'UN OBJET

(30) Priorität: 24.04.2007 DE 102007019267
(43) Veröffentlichungstag der Anmeldung: 12.08.2009
(73) Patentinhaber: DeguDent GmbH, 63457 Hanau (DE)
(72) Erfinder: GRASER, Rainer, 89073 Ulm (DE); HIBST, Raimund, 89150 Erbach (DE); MÜLLER, Michael, 89073 Ulm (DE); STOCK, Karl, 73479 Ellwangen (DE)
(74) Vertreter: Stoffregen, Hans-Herbert
(86) Internationale Anmeldenummer: PCT/EP2008/054982
(87) Internationale Veröffentlichungsnummer: WO 2008/129073

(56) Entgegenhaltungen:
- WO-A-2007/090865
- DE-A1- 10 321 885
- DE-A1- 19 632 594
- US-B1- 6 867 406

## Beschreibung

Die Erfindung bezieht sich auf eine Messanordnung zum dreidimensionalen Messen von zumindest einem Teil eines Objekts, insbesondere eines semitransparenten Objekts, umfassend eine erste Lichtquelle mit einem kontinuierlichen Spektrum, eine Einrichtung zur Erzeugung eines multifokalen Beleuchtungsmusters, ein Objektiv mit großer chromatischer Aberration zur Abbildung von Foki des Beleuchtungsmusters auf das Objekt, eine Detektiereinrichtung, wie ein CCD-Flächendetektor, zur Ermittlung der Wellenlängenspektren der konfokal über das Objektiv auf das Objekt abgebildeten Foki sowie eine spektraldispersive Einrichtung, die zwischen den konfokal abgebildeten Foki und der Detektionseinrichtung angeordnet ist.

Ferner nimmt die Erfindung Bezug auf ein Verfahren zum Messen der Form zumindest eines Abschnitts eines Objekts, insbesondere eines semitransparenten Objekts wie zumindest Abschnitt eines Zahns, unter Verwendung einer Lichtquelle zur Erzeugung von Licht mit einem kontinuierlichem Spektrum, einer Einrichtung zur Erzeugung eines multifokalen Beleuchtungsmusters, eines Objektivs mit großer chromatischer Aberration zur Abbildung von Foki des Beleuchtungsmusters auf das Objekt, eine Detektiereinrichtung zur Ermittlung der Wellenlängenspektren der konfokal über das Objektiv auf das Objekt abgebildeten Foki, wobei aus dem jeweiligen Wellenlängenspektrum die spektrale Peaklage eines jeden Fokus bestimmt wird, aus der die Erstreckung des Objekts in Richtung des Abbildungsstrahls berechnet wird.

In vielen Bereichen der Technik ist es erforderlich, dreidimensionale Strukturen von Objekten zu bestimmen, d.h. zu messen. Hierzu gehört auch die Ermittlung einer Zahnform, die zur Anfertigung von Zahnersatz notwendig ist. Werden nach herkömmlichen Verfahren Zahnrekonstruktionen mit Hilfe eines Gipsabdrucks angefertigt, so besteht das Bestreben, die entsprechende klassische Verfahrensweise zu verlassen und berührungslos die Geometrie der Zahnform zu bestimmen.

Aus dem Stand der Technik sind zahlreiche Verfahren bekannt, um die dreidimensionale Struktur von Körpern zu erfassen. Gelangen optische Verfahren zum Einsatz, so sind das Streifenprojektionsverfahren bzw. Phasenshiftverfahren, die optische Kohärenztomografie oder die Holografie zu nennen. Auf dem Gebiet der Zahntechnik gelangt dabei das Phasenshiftverfahren bereits zum Einsatz.

Es hat sich jedoch herausgestellt, dass entsprechende optische Verfahren insbesondere bei Objekten starker Streuung, wie dies bei Zähnen der Fall ist, nicht die gewünschten Ergebnisse zeigen. Bei dem Streifenprojektionsverfahren führt zum Beispiel die Streuung zu einer Unschärfe der Streifen und damit zu einer verminderten Auflösung.

Es sind auch Verfahren bekannt, bei denen nicht das gesamte Objekt, sondern nur in einem Bereich mit einem scharfen Fokus oder mehreren Foki unter Verwendung einer konfokalen Abbildung beleuchtet wird. Zur Aufnahme eines vollständigen zweidimensionalen Bildes müssen der Fokus bzw. die Foki über das Objekt gescannt werden. Sollen dreidimensionale Strukturen erfasst werden, ist es erforderlich, dass die Fokusebene axial verschoben wird.

Alternativ kann zur Abbildung des Fokus' bzw. der Foki eine breitbandige Lichtquelle einer geeignete Optik mit stark wellenlängenabhängiger Brennweite zum Einsatz gelangen. Dadurch werden die Foki abhängig von der Wellenlänge in unterschiedlichen Abständen zum Objektiv scharf abgebildet. Nach rückwärtiger Abbildung der Foki über das Objektiv ist in der Fokusebene für die Farbe, die bei dem entsprechenden Objektabstand scharf abgebildet wird, ein Intensitätsmaximum detektierbar. Durch Bestimmung der spektralen Peaklage lässt sich somit der Abstand des Objekts zum Objektiv in diesem Punkt und damit letztendlich die dreidimensionale Struktur des Objekts bestimmen. Die Auswertung erfolgt dabei entweder punktweise über ein Spektrometer oder linienweise über ein Linienspektrometer mit Kamerachip.

Aus der EP-B-0 321. 529 ist eine Messanordnung zur Messung der Abstände zwischen einem Objektiv mit großer chromatischer Aberration und einem Objekt bekannt. Zur Detektion wird eine Schwarz-Weiß-CCD-Flächenkamera benutzt, der eine spektraldispersive Apparatur vorgeordnet ist, die einen Eingangsspalt aufweist. Hierdurch wird die Wellenlängeninformation für jeden Punkt in eine Ortsinformation umgesetzt, um ein Profilbild der Oberfläche des Objekts zu gewinnen.

Die EP-B-0 466 979 bezieht sich auf eine Anordnung zur simultanen konfokalen Bilderzeugung. Hierzu werden über eine Lochrasterblende wie Nipkow-Scheibe Lichtpunkte erzeugt, die fokussiert auf ein Objekt abgebildet werden. Als Detektiereinheit wird eine CCD-Array-Kamera benutzt.

Aus der DE-A-102 42 374 ist ein konfokaler Abstandssensor mit einer Abbildungsoptik mit chromatischer Aberration bekannt, der für die Inspektion im Elektronikbereich bestimmt ist. Als Lichtquelle kann eine solche mit einer Mehrzahl von Punktlichtquellen benutzt werden. Als Lichtempfänger gelangen Punktdetektoren zum Einsatz, wobei jeweils ein Punktdetektor und eine Punktlichtquelle einander zugeordnet und konfokal zueinander angeordnet sind.

Aus der DE-A-103 21 885 ist eine konfokale Messanordnung zum dreidimensionalen Messen eines Objekts mit chromatischer Tiefenaufspaltung bekannt, bei der mittels eines Mikrolinsen-Arrays eine Vielzahl von Foki erzeugt und aufs Objekt abgebildet werden. Das reflektierte Licht wird in die Ebene der Mikrolinsenfoki zurückfokussiert. Mit der Anordnung werden zwei- oder dreidimensionale Mikroprofile von Messobjekten oder zwei- oder dreidimensionale Transparenz- oder Reflexionsprofile gemessen.

Der vorliegenden Erfindung liegt die Aufgabe zugrunde, eine Messanordnung sowie ein Verfahren zur dreidimensionalen Bestimmung der Form eines insbesondere semitransparenten Objekts wie Zahns derart weiterzubilden, dass auch bei bewegten Objekten in relativ kurzer Zeit ein Oberflächenprofil erstellbar ist, das eine hohe Genauigkeit aufweist. Insbesondere sollen streuende bzw. stark streuende Objekte, die einen sehr hohen Weißlichtuntergrund liefern, gemessen werden können, so dass auch ein Einsatz im Bereich der Zahnmedizin bzw. -technik ermöglicht wird.

Zur Lösung der Aufgabe sieht eine Messanordnung der eingangs genannten Art vor, dass in der Ebene der konfokal abgebildeten Foki ein erstes Lochmuster mit ersten Löchern angeordnet ist, wobei die geometrische Anordnung der ersten Löcher der geometrischen Anordnung der Foki des multifokalen Beleuchtungsmusters entspricht.

Abweichend von bekannten Anordnungen wird in der die auf dem Objekt auftreffenden Foki abbildenden Fokusebene des Objektivs, das eine starke chromatische Aberration aufweist, ein Lochmuster oder Pinhole-Array angeordnet, auf das folglich das Beleuchtungsmuster rückwärtig vom Messobjekt konfokal abgebildet wird. Dabei ist die geometrische Zuordnung der ersten Löcher des ersten Lochmusters auf das Beleuchtungsmuster derart ausgerichtet, dass eine eindeutige Zuordnung erfolgt, so dass infolge dessen den Foki in den Löchern des Lochmusters Ortskoordinaten in einer Ebene zuordbar sind, die senkrecht zum das Objektiv durchsetzenden Strahlengang verläuft.

Erfindungsgemäß werden über eine Fläche verteilte Löcher oder Pinholes in der Fokusebene des Objektivs angeordnet, in die das Beleuchtungsmuster rückwärtig vom Objekt konfokal abgebildet wird. Dabei werden in den Pinholes wellenlängenabhängig und in Abhängigkeit vom Abstand zwischen dem Objektiv und dem Objekt auf dem Objekt abgebildete Foki abgebildet, die sodann mit der Detektiereinrichtung spektral ausgelesen werden. Dabei ist erfindungsgemäß insbesondere vorgesehen, dass die der Detektionseinrichtung vorgeschaltete dispersive Einrichtung die Spektrallinien des in dem jeweiligen Loch abgebildeten Fokus lateral aufspaltet, bevor die Spektrallinien auf Pixeln der Detektiereinrichtung auftreffen. Hierzu ist vorgesehen, dass die Detektionseinrichtung in einer Fläche angeordnete Pixel eines CCD-Flächensensors umfasst, wobei die dispersive Einrichtung derart zu dem ersten Lochmuster bzw. der Detektionseinrichtung relativ geneigt verläuft, dass die lateral aufgespreizten Spektren überlappungsfrei auf der Pixelfläche abbildbar sind. Dabei ist insbesondere vorgesehen, dass die aufgespreizten Spektren derart auf die Pixelfläche auftreffen, dass aufeinanderfolgend lateral aufgespreizte Spektren pixelfrei ineinander übergehen.

Zu der Neigung der spektraldispersiven Einrichtung ist Folgendes anzumerken. Die Richtung der spektralen Aufspreizung der spektraldispersiven Einrichtung bildet zur Verbindungslinie benachbarter Punkte einen Winkel von z.B. 6,5°, damit die Pixel-Strecke, die zur spektralen Aufweitung und Auswertung zur Verfügung steht, größer ist als der Abstand benachbarter Pinholes. Die Verkippung der optischen Achse nach der spektraldispersiven Einrichtung wie Dispersionsprisma ist z.B. 15°.

Es wird erfindungsgemäß folglich eine Farbmesseinheit vorgeschlagen, die aus dem dispersiven Element zur spektralen Aufspreizung des Lichts eines jeden Pinholes entlang einer Linie und einem CCD-Chip besteht, auf welchem die spektral aufgespreizten Messpunkte abgebildet werden. Somit ergibt sich eine einem Linienspektrometer ähnliche Anordnung mit dem Unterschied, dass die Messpunkte nicht auf einer Linie, sondern gleichmäßig über die gesamte Messfläche angeordnet sind. Die einzelnen Löcher des Pinhole-Arrays entsprechen dem eines langen Spalts eines Linienspektrometers.

Das Beleuchtungsmuster ist dabei auf die Farbmesseinheit derart abgestimmt, d.h. so gewählt, dass die Freiräume zwischen den einzelnen Foki für die spektrale Zerlegung des Lichts und Messung entlang von Linien verwendet werden.

Entsprechend dem Beleuchtungsmuster erhält man mit einer Bildaufnahme mehrere Stützstellen, also Messpunkte über das Messfeld verteilt. Ist der Abstand der Stützstellen größer als geforderte Auflösung, muss das Beleuchtungsmuster entsprechend verschoben werden. Dies kann entweder durch ein geeignetes optisches Element wie planparallele Platte in der Messanordnung erfolgen oder durch eine kontinuierliche Bewegung der Messanordnung selbst, wobei die resultierenden Einzelbilder zu einem Gesamtbild zusammengefügt werden.

Ergibt die Anordnung der Löcher in dem Lochmuster bzw. in dem Pinhole-Array die Ortskoordinaten in einer senkrecht zu dem das Objektiv durchsetzenden Strahlengang verlaufenden Ebene, so wird durch spektrale Auswertung des in dem jeweiligen Loch abgebildeten Fokus die erforderliche Höheninformation als Z-Koordinate ermittelt, da die Foki abhängig von der Wellenlänge in unterschiedlichen Abständen vom Objektiv scharf abgebildet werden und in den Löchern des Pinhole-Arrays nur die Foki abgebildet werden, die ihrerseits auf dem Objekt abgebildet waren.

Um ein Beleuchtungsmuster zu erzeugen, ist z.B. vorgesehen, dass der Lichtquelle ein Mikrolinsenarray zur Erzeugung des multifokalen Beleuchtungsmusters in der lichtquellenseitig verlaufenden ersten Fokusebene des Objektivs nachgeordnet ist. Es besteht jedoch auch die Möglichkeit, in der ersten Fokusebene des Objektivs ein zweites Lochmuster anzuordnen, in dessen Löcher die Foki des multifokalen Beleuchtungsmusters abbildbar sind oder dessen Löcher das multifokale Beleuchtungsmuster selbst vorgeben.

Um die Foki in der Ebene des ersten Lochmustes abzubilden, ist zwischen dem Objektiv und der Detektiereinrichtung ein erster Strahlteiler angeordnet. Ein zweiter Strahlteiler kann des Weiteren zwischen dem Objektiv und dem Beleuchtungsmuster, insbesondere zwischen dem Objektiv und dem ersten Strahlteiler angeordnet sein, um ein Live-Bild des Objekts zu erhalten. Dabei ist vorzugsweise vorgesehen, dass das Objekt mit einer zweiten Lichtquelle bestrahlt wird, wobei der Spektralbereich der zweiten Lichtquelle auch außerhalb des Wellenlängenbereichs der ersten Lichtquelle liegen kann, der im Wesentlichen zur Formerfassung des Objekts auswertbar ist. Das Live-Bild kann über eine Kamera aufgenommen werden.

Unabhängig hiervon sollte der zweite Strahlteiler optisch derart ausgelegt sein, dass sich eine hohe Transmission für die Strahlung zur konfokalen Abbildung der Foki ergibt. Bei Verwendung eines Spektralbereichs für die Live-Bild-Einstellung, der außerhalb des Wellenlängenbereichs der ersten Lichtquelle liegt, handelt es sich bei dem zweiten Strahlteiler vorzugsweise um ein dichroitisches Filter, welches neben der hohen Transmission für die Strahlung der ersten Beleuchtungsquelle eine hohe Reflexion für die Strahlung der zweiten Lichtquelle aufweist. Um ein möglichst scharfes Live-Bild zu erhalten, ist es von Vorteil, wenn der für die Aufnahme verwendete Spektralbereich möglichst schmalbandig ist, was entweder durch Verwendung eines vor der Kamera bzw. dem Kamerachip vorgeschalteten Spektralfilters und/oder durch Verwendung einer schmalbandigen zweiten Lichtquelle erfolgen kann.

Anzumerken ist allerdings, dass es nicht zwingend erforderlich ist, dass eine zweite Lichtquelle eingesetzt wird. Vielmehr können die auf dem Objekt abgebildeten Foki zur Erzeugung eines Live-Bilds ausreichen.

In Weiterbildung der Erfindung ist vorgesehen, dass das erste Lochmuster den ersten Löchern zugeordnete zur Untergrundbestimmung der Messergebnisse bestimmte zweite Löcher aufweist, die außerhalb des Beleuchtungsmusters liegen.

Zur Erzielung einer kompakten Baueinheit ist vorgesehen, dass zwischen dem Objektiv und dem Objekt eine Strahlumlenkeinrichtung wie Spiegel vorgesehen ist, so dass sich eine konstruktiv einfache Bauart zur intraoralen Nutzung der Messanordnung ergibt.

Bei der ersten Lichtquelle handelt es sich insbesondere um eine Halogenlampe. Es können jedoch auch Weißlicht-LEDs oder mehrere farbige LEDs benutzt werden.

Alternativ besteht die Möglichkeit, dass die Strahlung der ersten Lichtquelle über Lichtleiter zuführbar ist, deren Auskoppelenden in der ersten Objektebene des Objektivs liegen und damit anstelle der Foki des Mikrolinsenarrays selbst die Foki darstellen. Alternativ liegt das Auskoppelende vorzugsweise eines Lichtleiters in der Fokusebene einer Kollimationsoptik, nach der der kollimierte Strahl des Lichtleiters auf das Mikrolinsen-Array fällt.

Um eine eindeutige geometrische Zuordnung des Bildmusters und des ersten Lochmusters und des zwischen diesen angeordneten ersten Strahlteilers zu erreichen, ist vorgesehen, dass das Mikrolinsen-Array, das erste Lochmuster und der erste Strahlteiler als eine Baueinheit ausgebildet sind. Dabei ergibt sich insbesondere eine Würfelgeometrie.

Um auf einfache Weise unterschiedliche Teilbereiche des Objekts messen zu können, können zwischen dem ersten Strahlteiler und dem Objektiv eine oder mehrere planparallele Platten angeordnet sein, die entsprechend dreh- bzw. schwenkbar sind. Insbesondere ist bei Vorhandensein einer planparallelen Platte diese um zwei in der von der Platte aufgespannten Ebene verlaufende Achse drehbar angeordnet.

Auch kann die Umlenkeinrichtung wie der Umlenkspiegel verschiebbar und/oder drehbar angeordnet sein, um unterschiedliche Teilbereiche des Objekts zu messen.

Ein Verfahren der eingangs genannten Art zeichnet sich dadurch aus, dass in der Ebene der konfokal abgebildeten Foki ein erstes Lochmuster mit ersten Löchern angeordnet wird, deren geometrische Anordnung mit der des multifokalen Beleuchtungsmusters korreliert, und dass durch die Position der ersten Löcher Positionen der Foki auf dem Objekt in einer senkrecht zum Abbildungsstrahl verlaufenden Ebene vorgegeben werden, wobei die Wellenlängenspektren der in den Löchern abgebildeten Foki gleichzeitig von der Detektiereinrichtung erfasst werden.

Dabei ist vorgesehen, dass das Wellenlängenspektrum eines jeden in einem Loch abgebildeten Fokus mit einer dem ersten Lochmuster nachgeordneten dispersiven Einrichtung lateral aufgespreizt wird.

Insbesondere schlägt die Erfindung vor, dass die Detektiereinrichtung eine die Wellenlängenspektren erfassende Pixelfläche eines CCD-Sensors aufweist, dass die Pixelfläche und/oder die dispersive Einrichtung zu dem ersten Lochmuster derart geneigt ausgerichtet werden, dass die Wellenlängenspektren der in den ersten Löchern abgebildeten Foki überlappungsfrei auf der Pixelfläche auftreffen.

Dabei sollte eine Ausrichtung der Pixelfläche und der dispersiven Einrichtung zu dem ersten Lochmuster derart erfolgen, dass die Wellenlängenspektren der in den ersten Löchern abgebildeten Foki überlappungsfrei ineinander übergehen.

Um in hinreichendem Umfang und mit der erforderlichen Genauigkeit die Wellenlänge des in den einzelnen Löchern scharf abgebildeten Foki zu ermitteln, ist vorgesehen, dass von einem Fokus ein erstes Spektrum ermittelt wird, das in den Strahlengang des Fokus ein Weglänge des Strahlengangs änderndes optisches Element angeordnet wird, dass von dem Fokus mit geändertem Strahlengang ein zweites Spektrum ermittelt wird, dass die Spektren voneinander subtrahiert werden und dass aus sich ergebenden gleichen Peaks unterschiedlichen Vorzeichens Wellenlänge der Strahlung des Fokus ermittelt wird.

Nach einem weiteren Vorschlag zur Ermittlung des die Wellenlänge bzw. den Wellenlängenbereich des Fokus charakterisierenden Peaks in der Messkurve ist zur Ermittlung des Untergrunds vorgesehen, dass spektraler Verlauf des Untergrunds des Spektrums des Fokus durch Ermittlung von Spektren in den ersten Löchern zugeordneten zweiten Löchern auftreffendem Licht ermittelt wird, wobei die Anordnung der zweiten Löcher von der des multifokalen Beleuchtungsmusters abweicht. Dabei werden vorzugsweise Spektren von Licht mehrerer einem ersten Loch zugeordneter zweiter Löcher zur Untergrundermittlung gemittelt.

Werden zur Messung des Objekts nacheinander Teilbereiche des Objekts gemessen, so sollten aufeinanderfolgende Teilbereiche einen gemeinsamen Unterteilbereich umfassen, der 50 % bis 95 % des jeweiligen Teilbereichs beträgt. Somit ist eine einfache Korrelation zwischen den einzelnen Messungen möglich. Des Weiteren ist vorgesehen, dass zur Ermittlung der Form des zumindest einen Abschnitts des Objekts die Teilbereiche nacheinander mit einer Bildfolge zwischen 25 und 50 Bildern pro Sekunde aufgenommen werden.

Bevorzugterweise ist das Messverfahren zum intraoralen Messen von Zähnen bzw. Zahnbereichen vorgesehen. Hierzu kann das Objektiv mit der Umlenkeinrichtung in den Mundbereich eingeführt werden, um die Messungen durchzuführen.

Weitere Einzelheiten, Vorteile und Merkmale der Erfindung ergeben sich nicht nur aus den Ansprüchen, den diesen zu entnehmenden Merkmalen -für sich und/oder in Kombination -, sondern auch aus der nachfolgenden Beschreibung von der Zeichnung zu entnehmenden bevorzugten Ausführungsbeispielen.

Es zeigen:
- Fig. 1: eine erste Ausführungsform einer Messanordnung in prinzipieller Darstellung,
- Fig. 2: ein Beleuchtungsmuster,
- Fig. 3: eine Spektralverteilung,
- Fig. 4: eine Messkurve,
- Fig. 5: eine Lochanordnung mit ersten und zweiten Löchern,
- Fig. 6: eine monolithische Ausführungsform eines Mikrolinsen-Arrays und Pinhole-Arrays mit Strahlteiler,
- Fig. 7: eine zweite Ausführungsform einer Messanordnung und
- Fig. 8: durch Subtraktion zweier Messkurven ermittelte Peaklagen.

In den Figuren, in denen grundsätzlich gleiche Elemente mit gleichen Bezugszeichen versehen sind, werden verschiedene Ausführungsformen von Messanordnungen dargestellt, um insbesondere intraoral einen Zahn bzw. einen Bereich eines solchen oder mehrere Zähne oder Bereiche dieser zu scannen, um die dreidimensionale Form zu erfassen. Dabei werden die die Form repräsentierenden Daten digital zur Verfügung gestellt, um sodann in gewohnter Weise im CAD/CAM-Verfahren aus insbesondere vorgesinterten Keramikrohlingen eine Zahnrekonstruktion herzustellen.

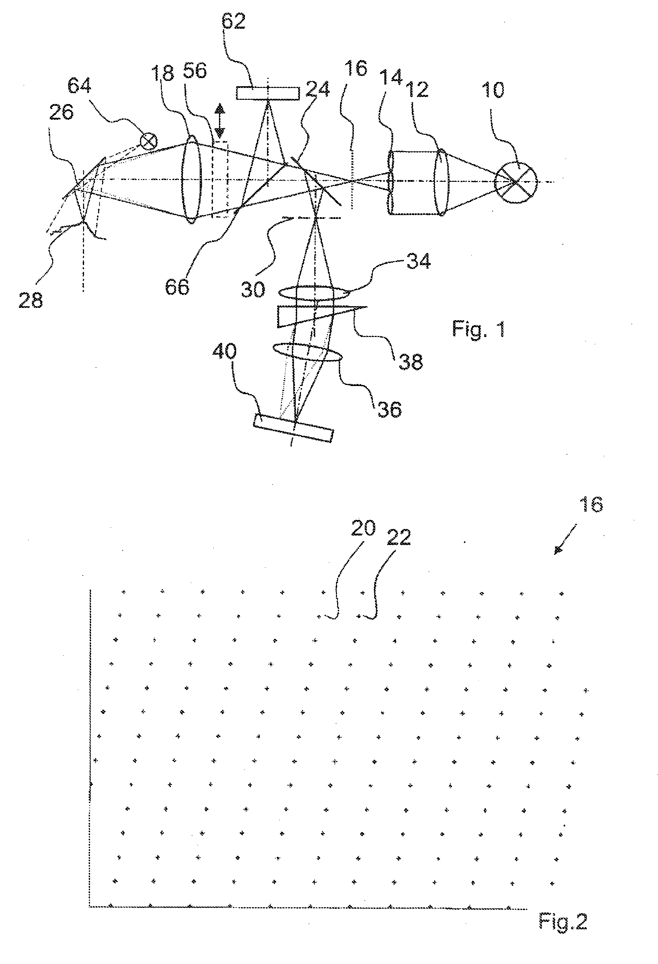

Die Messanordnung umfasst dabei als wesentliche Elemente eine Lichtquelle 10 wie Halogenlampe, deren Licht über eine Linse 12 kollimiert wird. Der kollimierte Lichtstrahl fällt auf ein Mikrolinsen-Array 14, welches ein Beleuchtungsmuster 16 in einer Fokusebene eines Objektivs 18 großer chromatischer Aberration abbildet. Das Beleuchtungsmuster kann z.B. eine Größe von 20 mm x 15 mm mit ca. 1600 Foki oder z.B. eine Größe von 5mm x 6,5mm mit ca 2000 Foki im Abstand von 250 µm aufweisen, das durch das Mikrolinsen-Array 14 erzeugt wird. In Fig. 2 ist rein beispielhaft das entsprechende Beleuchtungsmuster 16 dargestellt, in dem zwei Foki beispielhaft mit dem Bezugszeichen 20, 22 gekennzeichnet sind.

Das Beleuchtungsmuster 16 kann derart konzipiert sein, dass sich ein Durchmesser der Foki 20, 22 von jeweils ca. 25 µm oder ca. 12 µm ergibt.

Zur Verbesserung der Beleuchtungsstruktur kann das Mikrolinsen-Array 14 mit einem darauf abgestimmten Pinhole-Array kombiniert werden, das sich in der Objektebene des Objektivs 18 befindet. Dabei sind die Löcher des Pinhole-Arrays auf das Beleuchtungsmuster, das durch die Foki 20, 22 gebildet wird, geometrisch bzw. lagemäßig abgestimmt.

Entsprechend der Darstellung der Fig. 1 fällt das von der Lichtquelle 10 stammende Licht nach dem Beleuchtungsmuster 16 auf einen Strahlteiler 24, von dem der transmittierte Anteil auf das Objektiv 18 mit starker chromatischer Aberration fällt.

Der Strahlteiler 24 ist entsprechend der zeichnerischen Darstellung als Platte mit einer teilreflektierenden Schicht dargestellt. Alternativ sind andere strahlteilende Elemente möglich. Beispielsweise sind Strahlteilerwürfel zu nennen. Auch ein ringförmiger Spiegel oder ein kleinerer Spiegel ist denkbar, wobei jeweils der äußere oder innere Strahlanteil zur nachstehend zu erläuternden Detektion oder zur Beleuchtung dient.

Die das Objektiv 18 durchsetzende Strahlung wird über eine Umlenkeinrichtung 26 wie Umlenkspiegel auf ein zu messendes Objekt 28 wie Zahn abgebildet. Dabei ist der Abstand zwischen der Ebene des Beleuchtungsmusters 16 und dem Objekt 28 so gewählt, dass die Foki nach der Umlenkung über die Umlenkeinrichtung 26 auf die Oberfläche des Objekts 28 abgebildet werden, wobei je nach Abstand der Objektoberfläche zum Objektiv 18 eine andere Farbe, d.h. Wellenlänge, scharf abgebildet wird. Der gewählte Abbildungsmaßstab bestimmt dabei die Größe des Messfelds und die Auflösung.

Die von dem Objekt 28 emittierte Strahlung bzw. das Licht fällt zum Teil in das Objektiv 18 zurück und nach teilweiser Reflexion am Strahlteiler 24 auf ein erstes Lochmuster oder Pinhole-Array 30, dessen Löcher bzgl. des Abstands der Löcher zueinander, der Größe und der geometrischen Anordnung insgesamt dem des Beleuchtungsmusters 16 entspricht.

Mit anderen Worten ist die axiale und laterale Lage des Pinhole-Arrays 30, d.h. dessen Löcher so gewählt, dass die Foki auf der Oberfläche des Objekts 28 konfokal in die Löcher des Pinhol-Arrays 30 abgebildet werden. Somit wird durch jedes Loch des Pinhole-Arrays 30 die X-, Y-Koordinate des abgebildeten Fokus auf der Oberfläche des Objekts 28 vorgegeben.

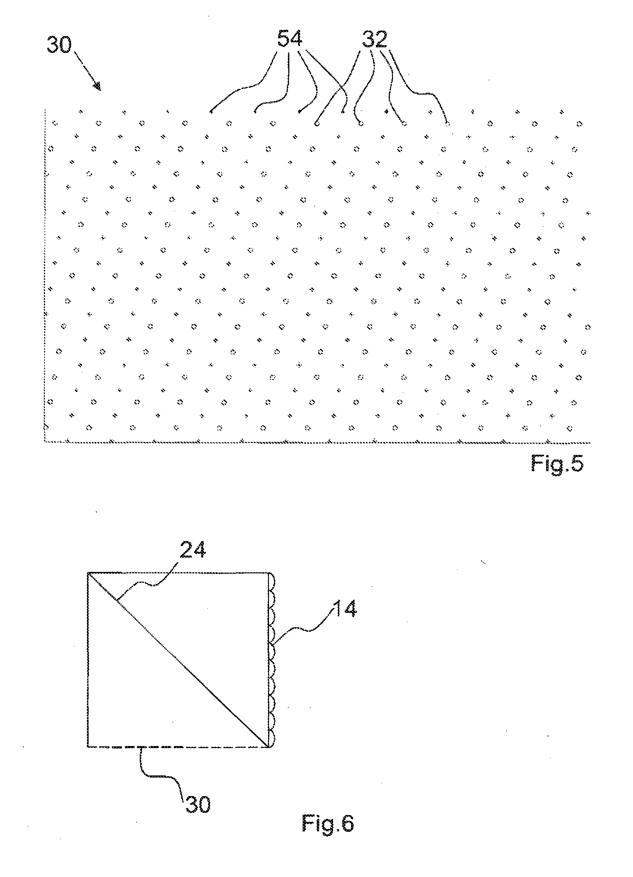

In Fig. 5 ist eine Ausgestaltung des Pinhol-Arrays 30 wiedergegeben, in denen die offenen Kreise 32 in ihrer Anordnung und Erstreckung dem Muster der Foki des Beleuchtungsmusters 16 entsprechen.

Durch die starke chromatische Aberration des Objektivs 18 wird in dem jeweiligen durch die Lage der Foki des Beleuchtungsmusters 16 vorgegebenen Messpunkte entsprechend deren Abstände zum Objektiv 18 jeweils nur eine bestimmte Farbe scharf abgebildet, d.h. nur eine bestimmte Wellenlänge erfüllt die konfokale Bedingung. Entsprechend tritt im Spektrum des durch das jeweilige Loch 32 des Pinhol-Arrays 30 transmittierten Lichts bei dieser Wellenlänge ein Intensitätsmaximum auf.

Mit zunehmender Dichte der Messpunkte und mit zunehmender Lichtstrahlung des Objekts 28 fällt neben der Peakwellenlänge auch ein zunehmender Weißlichtanteil durch das Loch bzw. das Pinhole. Um ungeachtet dessen die für den Fokus charakteristische Peakwellenlänge in hinreichendem Umfang und mit der notwendigen Genauigkeit zu ermitteln, ist vorgesehen, dass dem Pinhole-Array 30 eine auf das Beleuchtungsmuster 16 und damit dem Lochmuster des Pinhole-Arrays 30 abgestimmte spektrometrische Anordnung nachgeordnet ist, die im Ausführungsbeispiel aus Optiken 34, 36 und einem zwischen diesen angeordneten spektraldispersiven Element besteht, das ein Prisma 38 sein kann.

Über die Optiken 34, 36, die aus einer oder mehreren Linsen bestehen können, wird das Pinhole-Array 30 auf einen CCD-Flächensensor als Detektiereinrichtung 40 abgebildet. Das spektraldispersive Element, also das Prisma 38 bewirkt eine laterale spektrale Aufspreizung des in den Löchern mit Intensitätsmaximum auftretenden Wellenlängenbereichs des Lichts des Fokus, so dass folglich jedes Loch des Pinhole-Arrays 30 auf eine Linie auf dem CCD-Flächensensor 40, also den in einer Fläche angeordneten Pixeln abgebildet wird, wobei - wie bei einem Zeilenspektrometer - die Position entlang dieser Linie mit einer bestimmten Wellenlänge korreliert. Dabei wird die aus den Optiken 34, 36 und dem Prisma 30 bestehende spektraldispersive Einheit und der CCD-Sensor 40 derart zu dem Pinhole-Array 30 ausgerichtet, dass die lateral aufgespreizten Spektrallinien von aufeinanderfolgenden Löchern des Pinhol-Arrays 30, die folglich Linien auf den Pixeln bilden, ohne oder nahezu ohne Freiräume ineinander übergehen, ohne dass eine Überlappung erfolgt.

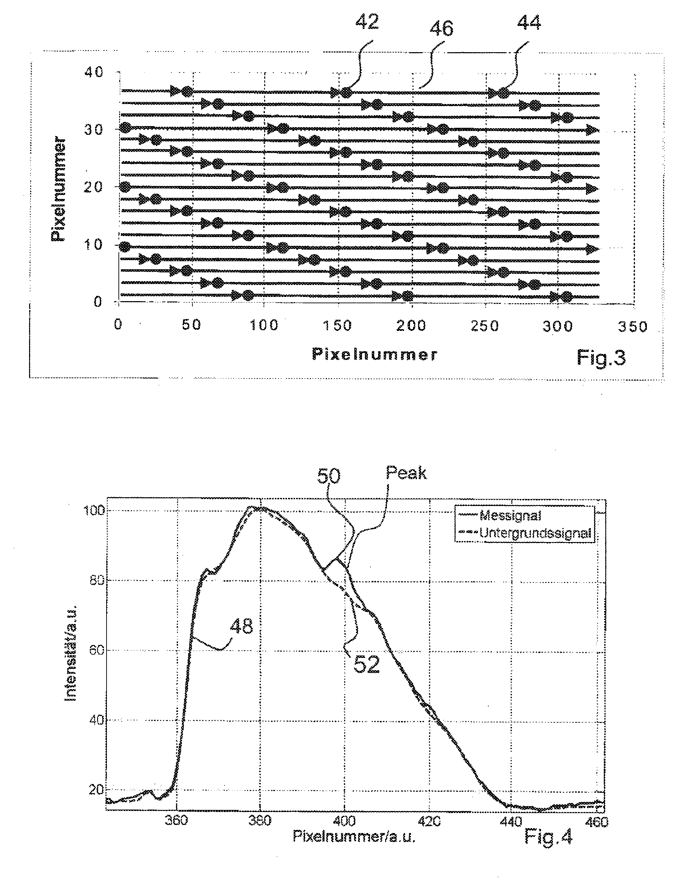

So ergibt sich aus Fig. 3, dass dem Grunde nach sämtliche Pixel zwischen den Messpunkten für die spektrale Aufspreizung und damit für die Bestimmung der Peaklage verwendet werden. Die ausgefüllten Kreise 42 symbolisieren einen Messpunkt und der zum nachfolgenden Messpunkt 44 verlaufende Pfeil 46 die lateral aufgespreizten Spektrallinien des in dem dem Messpunkt 42 entsprechenden Loch des Pinhol-Arrays abgebildeten Fokus.

Wird beispielhaft das oben angegebene Beleuchtungsmuster mit den angegebenen Dimensionierungen gewählt und ein CCD-Chip oder Kamera-Chip mit einer Größe 6,4 mm x 4,8 mm mit 1 Mio. Pixel (Pixelgröße 6,7 µm x 6,7 µm), so stehen pro Messpunkt 186 Pixel für die spektrale Aufspreizung zur Verfügung. Bei einer Linienbreite von 2 Pixel, entsprechend dem Pinhole-Durchmesser, wird so für jeden der ca. 2000 Messpunkte und ca. 2000 Untergrundpunkte ein Zeilenspektrometer mit jeweils 93 Elementen für die spektrale Aufspreizung realisiert. Nach Bildaufnahme erfolgt die Auswertung der Bildinformation bzw. der Messdaten entweder bereits auf dem CCD-Sensor oder auf einer externen Einheit. Hierzu werden in jedem Messpunkt durch einen geeigneten Algorithmus die spektrale Peaklage und daraus der Abstand jedes Messpunkts zum Objekt 28 ermittelt. Mit einem Bild erhält man so die dreidimensionale Struktur des Objekts 28 in den Stützstellen oder Messpunkten, wobei die Auflösung von dem gewählten Fokusabstand und dem Abbildungsmaßstab des Objektivs 18 abhängt.

Ist der Abstand der Stützstellen größer als die geforderte Auflösung und/oder die dreidimensionale Struktur aus einer Perspektive nicht erfassbar, so kann das Beleuchtungsmuster 16 entsprechend verschoben werden. Handelt es sich bei der Messanordnung um eine von Hand zu betätigende Vorrichtung, so kann durch kontinuierliche Bewegung der Messanordnung eine vollständige Erfassung des Objekts 28 erfolgen, wobei die resultierenden Einzelbilder in geeigneter Weise zu einem Gesamtbild zusammengefügt werden.

Da erwähntermaßen in den Löchern 32 des Pinhol-Arrays 30 dann, wenn das Objekt 28 stark streuend ist, nicht nur die Wellenlänge des scharf abgebildeten Fokus abgebildet werden, sondern auch im erheblichen Umfang Weißlicht, müssen Verfahren zur Anwendung gelangen, um den hierdurch bedingten Untergrund zu eliminieren oder zu reduzieren.

Um die Bedeutung des Weißlichtuntergrunds bei der Messung und Auswertung zu veranschaulichen, wird in Fig. 4 ein typisches Messsignal 48 an einem Zahn als das Objekt 28 dargestellt. Je höher der Anteil des Weißlichtuntergrunds am Messsignal 48 ist, umso genauer muss für die Bestimmung der Lage des für die Wellenlänge des Fokus charakteristischen Peaks 50 der Spektralverlauf des Untergrunds 52 in jedem Messpunkt bekannt sein. Hierbei kann ein Verfahren zur Anwendung gelangen, dass rein prinzipiell durch die Fig. 5 verdeutlicht wird. So weist das Pinhole-Array 30 neben den Löchern 32, in denen die Foki abgebildet werden, weitere Löcher 54 auf, die nicht mit dem Beleuchtungsmuster 14 übereinstimmen. Entsprechend der bevorzugten Anordnung gemäß Fig. 5 liegen die mit dem Beleuchtungsmuster 14 nicht übereinstimmenden Löcher 54 zwischen den dem Beleuchtungsmuster 14 entsprechenden Löchern 32. Die Spektren in den Löchern 54, in denen Foki nicht abgebildet sind, geben sodann ungefähr das Untergrundsignal der benachbarten Löcher 32 wieder, in denen Foki abgebildet sind und somit Messpunkte bilden. Dabei kann alternativ das Messsignal eines einzelnen benachbarten im Grunde nur Weißlicht enthaltenden Lochs 54 als Untergrund oder der Mittelwert über mehrere benachbarte Löcher 54 zur Bestimmung des Untergrunds 52 verwendet werden. Dabei können die Löcher 54 als unbeleuchtete und die Löcher 32 als beleuchtete Löcher oder Pinholes bezeichnet werden.

Entsprechend der Anordnung der beleuchteten oder ersten Löcher 32, in denen Foki abgebildet werden und der für die Untergrundbestimmung verwendeten zweiten Löcher 54, die auch als unbeleuchtete Löcher zu bezeichnen sind, stehen pro Messpunkt nur noch die Hälfte der Pixel für die spektrale Aufspaltung zur Verfügung, verglichen mit der Variante, bei der die Anzahl der Foki mit der der Pinholes oder Löcher 32 übereinstimmt.

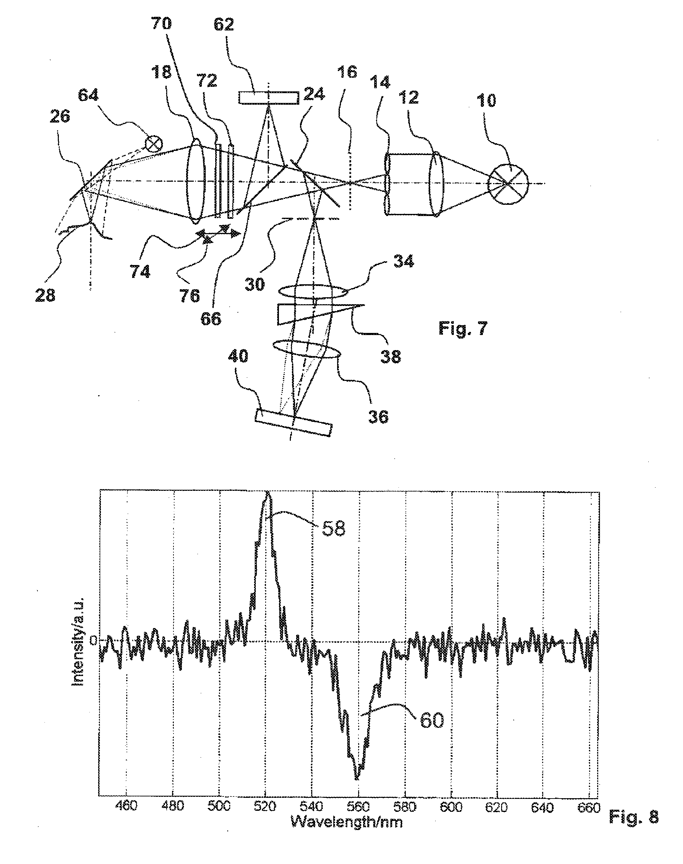

Eine weitere Möglichkeit zur Bestimmung des Weißlichtanteils ist die Verwendung einer planparallelen Platte 56, die in den Strahlengang zwischen dem ersten Strahlteiler 24 und der Strahlumlenkung 26, insbesondere zwischen dem Objektiv 18 und dem ersten Strahlteiler 24 angeordnet wird. Die planparallele Platte 56 im Strahlengang bewirkt eine axiale Verschiebung der Foki, die letztendlich im Messsignal eine Verschiebung der Peaklage bewirkt. Durch eine sequenzielle Bildaufnahme an einer Position mit und ohne planparallele Platte 56 erhält man pro Messpunkt zwei Spektren mit unterschiedlicher Peaklage und identischem Untergrund. Durch Abzug der beiden Spektren lässt sich dadurch der Untergrunds eliminieren. Ein typischer Signalverlauf durch Subtraktion der beiden Spektren ist in Fig. 8 dargestellt. Man erkennt die durch die Subtraktion bestimmten Peaks 58, 60, deren Abstand durch die planparallele Platte 56 bestimmt ist.

Für die weitere Auswertung zur Bestimmung des gesuchten Objektabstands können verschiedene Kenngrößen unter anderem die beiden Extrema, also Peaks 58, 60 und/oder die spektrale Lage des Nulldurchgangs verwendet werden.

Zur Positionierhilfe und zur Einzelbildzuordnung für eine Gesamtbilderzeugung kann eine Live-Bildelfassung vorgesehen sein. Hierzu ist im Ausführungsbeispiel ein weiterer Kamerachip 62 vorgesehen, auf den das Objekt 28 abgebildet wird. Zusätzlich kann eine weitere Lichtquelle 64 vorgesehen sein, die das Objekt 28 vorzugsweise über die Umlenkeinrichtung 26 bestrahlt. Anstelle einer Lichtquelle 64 können auch mehrere Lichtquellen vorgesehen sein. Für die Live-Bildaufnahme sollte die Lichtquelle 64 Licht in einem Spektralbereich emittieren, der außerhalb des für die eigentliche Messung verwendeten Wellenlängenbereichs liegt. Dadurch sind Live-Bild und Messung unabhängig voneinander möglich.

Zur Strahlteilung kann in den Strahlengang zwischen dem Objektiv 18 und dem ersten Strahlteiler 24 ein zweiter Strahlteiler 66 wie ein dichroitischer Filter verwendet werden, der eine hohe Transmission für das Messsignal und eine hohe Reflexion für das Live-Bildsignal aufweist.

Erwähntermaßen wird für die Abbildung des Objekts 28 auf den Kamerachip 62 gleichfalls das Objektiv 18 verwendet, wobei die axiale Position des Kamerachips 62 so gewählt ist, dass das Live-Bild ungefähr in der Mitte des Messbereichs scharf ist.

Insbesondere bei einer intraoralen Anwendung zur Vermessung von Zähnen ist die Baugröße und Bauform der Messanordnung bzw. des Messgeräts von großer Bedeutung. So können in Ausgestaltung der Erfindung allein das Objektiv 18 und die Strahlumlenkung 26 in einem intraoralen Teil eines Handgeräts angeordnet sein, der in einem Mundraum einführbar ist. Die anderen Komponenten können in einem extraoralen Teil des Handgeräts oder in einer separaten Geräteeinheit integriert sein. Bei kompakter Lichtquelle ist eine Integration in einem Handgerät möglich.

Anstelle der Halogenlampe 10 sind auch andere Lichtquellen wie beispielsweise ein Weißlicht-LED oder mehrere verschiedenfarbige LEDs mit geeigneter Kollimationsoptik denkbar.

Alternativ kann die Lichtquelle 10 in einem externen Gerät integriert sein und das Licht über Fasern in das Handgerät geführt werden, wobei das Auskoppelende des Lichtleiters im Fokus der Kollimatorlinse 12 liegt, oder die Auskoppelenden mehrerer entsprechender Lichtleiter selbst, stellen anstelle der Foki des Mikrolinsen-Arrays die Foki des Beleuchtungsmuster dar.

Zur Erzeugung des multifokalen Beleuchtungsmusters 16 kann anstelle des Mikrolinsen-Arrays 14 oder zusätzlich hierzu auch ein Pinhole-Array verwendet werden, das in der Ebene des in den Fig. dargestellten Beleuchtungsmusters 16 anordbar ist.

Wesentlich für eine exakte Messung und einfache Handhabbarkeit der Messanordnung ist es, dass eine genaue geometrische und räumliche Zuordnung von Mikrolinsen-Array 14 und Pinhole-Array 30 gegeben ist. Um dies zu verwirklichen, kann eine monolithische Ausführung gewählt werden, die prinzipiell der Fig. 6 zu entnehmen ist. In der monolithischen Ausführungsform, die eine Würfelgeometrie aufweisen kann, ist ferner der erste Strahlteiler 24 integriert.

Sofern das Objekt 28 nicht durch eine einzelne Aufnahme, sondern durch eine Vielzahl von Aufnahmen, also einzelnen Bildern gemessen bzw. gescannt wird, müssen die einzelnen Bilder eine eindeutige Zuordnung zueinander haben, um eine einfache Auswertung zu ermöglichten. Hierzu ist insbesondere vorgesehen, dass sich die Einzelbilder in Teilen überlappen, die 50 % bis 95 % eines jeden Bilds ausmachen. Alternativ oder ergänzend kann als Hilfsmittel zur Überlagerung der Einzelbilder auch das Einbringen von Fixpunkten auf dem Objekt 28 dienen.

Alternativ zu einer manuellen Verschiebung des erwähntermaßen vorzugsweise als Handgerät ausgebildeten Messgeräts können Stellglieder in der Messanordnung integriert sein, um Messpunkte zu verschieben. Der maximal notwendige Verschiebeweg entspricht dabei dem Messpunktabstand abzüglich der gewünschten Auflösung, im erläuterten Ausführungsbeispiel also bei einer gewünschten Auflösung von 225 µm (250 µm Abstand der Löcher - 25 µm Auflösung).

Eine Möglichkeit, um Einzelbilder zu gewinnen, ergibt sich aus der Fig. 7. So sind im Messstrahl - und zwar im Ausführungsbeispiel vor dem Objektiv 18 - planparallele Platten 70, 72 anordbar, wobei auch die Verwendung einer einzigen Platte mit zwei Drehachsen (siehe Pfeile 74, 76) möglich ist. Dabei verlaufen die Drehachsen vorzugsweise in der von der planparallelen Platte 70, 72 aufgespannten Ebene. Eine weitere mögliche Ausführung ist die Verwendung eines verschiebbaren bzw. verdrehbaren Umlenkspiegels wie der Umlenkeinrichtung 26 als variable Strahlumlenkung,

Bezüglich des Live-Bilds ist anzumerken, dass alternativ auf eine zusätzliche Lichtquelle verzichtet werden kann, insbesondere dann, wenn das Beleuchtungsmuster in dem für die Live-Bilderfassung verwendeten Spektralbereich unscharf ist.

Ferner können ein diffraktives Element zur Erzeugung der starken chromatischen Aberration und/oder ein diffraktives Element oder ein Gitter als dispersives Element und/oder CMOS-Detektoren anstelle von CCD-Chips und/oder LCD-Modulatoren oder DMDs zur Generierung des Beleuchtungsmusters anstelle des Mikrolinsen-Arrays verwendet werden.

## Patentansprüche

1. Messanordnung zum dreidimensionalen Messen von zumindest einem Teil eines Objekts (28), insbesondere eines semitransparenten Objekts, umfassend eine, vorzugsweise eine Halogenlampe oder Weisslicht-LEDs oder mehrere farbige LEDs umfassende und aus dieser bzw. diesen bestehende, erste Lichtquelle (10) mit einem kontinuierlichen Spektrum, eine Einrichtung (14) zur Erzeugung eines multifokalen Beleuchtungsmusters (16), ein Objektiv (18) mit großer chromatischer Aberration zur Abbildung von Foki des Beleuchtungsmusters auf das Objekt, eine Detektiereinrichtung (40), wie ein CCD-Flächendetektor, zur Ermittlung der Wellenlängenspektren der konfokal über das Objektiv auf das Objekt abgebildeten Foki sowie eine spektraldispersive Einrichtung (34, 36, 38), die zwischen den konfokal abgebildeten Foki und der Detektionseinrichtung angeordnet ist,
**dadurch gekennzeichnet,**
**dass** in der Ebene der konfokal abgebildeten Foki ein erstes Lochmuster (30) mit ersten Löchern (32) angeordnet ist, wobei die geometrische Anordnung der ersten Löcher der geometrischen Anordnung der Foki des multifokalen Beleuchtungsmusters entspricht.

2. Messanordnung nach Anspruch 1,
**dadurch gekennzeichnet,**
**dass** die dispersive Einrichtung (34, 36, 38) eine die in den ersten Löchern (32) abgebildeten Foki auf die Detektiereinrichtung (40) abbildende Optik mit jeweiliges Spektrum eines jeden Fokus lateral aufspreizendem dispersiven Element wie Prisma umfasst, wobei die abbildende Optik vorzugsweise zwei Optiken (34, 36) wie Linsen oder Linsensystem mit dem zwischen diesen angeordneten dispersiven Element (38) umfasst.

3. Messanordnung nach Anspruch 1 oder 2,
**dadurch gekennzeichnet,**
**dass** die Detektiereinrichtung (40) in einer Fläche angeordnete Pixel eines CCD-Flächensensors umfasst und dass die spektraldispersive Einrichtung (34, 36, 38) zu dem ersten Lochmuster (30) und/oder die Detektionseinrichtung zu der dispersiven Einrichtung derart angeordnet sind, dass die lateral aufgespreizten Spektren überlappungsfrei auf der Pixelfläche auftreffen, wobei insbesondere die aufgespreizten Spektren derart auf die Pixelfläche auftreffen, dass aufeinander folgend lateral aufgespreizte Spektren pixelfrei ineinander übergehen.

4. Messanordnung nach zumindest einem der vorherigen Ansprüche,
**dadurch gekennzeichnet,**
**dass** der ersten Lichtquelle (10) ein Mikrolinsenarray (14) zur Erzeugung des multifokalen Beleuchtungsmusters (16) in der lichtquellenseitig verlaufenden ersten Fokusebene des Objektivs (18) nachgeordnet ist, wobei vorzugsweise in der ersten Fokusebene des Objektivs (18) ein zweites Lochmuster angeordnet ist, in dessen Löcher die Foki des multifokalen Beleuchtungsmusters abbildbar sind oder dessen Löcher das multifokale Beleuchtungsmuster vorgibt.

5. Messanordnung nach zumindest einem der vorherigen Ansprüche,
**dadurch gekennzeichnet,**
**dass** die Messanordnung eine das Objekt (28) bestrahlende zweite Lichtquelle (64) aufweist, wobei insbesondere Spektralbereich der zweiten Lichtquelle (64) außerhalb des Wellenlängenbereichs der ersten Lichtquelle (10) liegt, der im Wesentlichen zur Formerfassung des Objekts (28) auswertbar ist.

6. Messanordnung nach zumindest einem der vorherigen Ansprüche,
**dadurch gekennzeichnet,**
**dass** zwischen dem Objektiv (28) und der Detektiereinrichtung (40) eine Strahlung auf das erste Lochmuster (30) umlenkender erster Strahlteiler (24) angeordnet ist, wobei vorzugsweise zwischen dem ersten Strahlteiler (24) und dem Objektiv (18) ein zweiter Strahlteiler (66) angeordnet ist, über den das Objekt (28) abbildende Strahlung der zweiten Lichtquelle (64) auf eine Erfassungseinrichtung (62) abbildbar ist, die insbesondere eine Kamera ist, und wobei insbesondere der zweite Strahlteiler (66) wie dichroitischer Filter optisch derart ausgelegt ist, dass eine hohe Transmission für die Strahlung zur konfokalen Abbildung der Foki und eine hohe Reflexion für die Strahlung der zweiten Lichtquelle (64) gegeben ist.

7. Messanordnung nach zumindest einem der vorherigen Ansprüche,
**dadurch gekennzeichnet,**
**dass** das erste Lochmuster (30) den ersten Löchern (32) zugeordnete zur Untergrundbestimmung von Messergebnissen bestimmte zweite Löcher (54) aufweist.

8. Messanordnung nach zumindest einem der vorherigen Ansprüche,
**dadurch gekennzeichnet,**
**dass** zwischen dem Objektiv (18) und dem Objekt (28) eine Strahlumlenkeinrichtung (26) angeordnet ist, wobei insbesondere das Objektiv (18) mit der Strahlumlenkeinrichtung (26) ein intraoral zu nutzender Abschnitt der Messanordnung ist, wobei vorzugsweise die Umlenkeinrichtung (26) wie ein Umlenkspiegel verschiebbar und/oder kippbar ausgebildet ist.

9. Messanordnung nach zumindest einem der vorherigen Ansprüche,
**dadurch gekennzeichnet,**
**dass** die Strahlung der ersten Lichtquelle (10) über Lichtleiter zuführbar ist, deren Auskoppelenden in der Fokusebene einer Kollimationsoptik (12) liegen, oder dass die Strahlung der ersten Lichtquelle (10) über Lichtleiter zuführbar ist, deren Auskoppelenden in der ersten Objektebene des Objektivs (18) liegen und damit anstelle der Foki des Mikrolinsenarrays selbst die Foki des Beleuchtungsmusters darstellen, oder dass die Strahlung der ersten Lichtquelle (10) über einen oder mehrere Lichtleiter zuführbar ist, deren Auskoppelende in der Fokusebene einer Kollimationsoptik (12) liegt, nach der der kollimierte Strahl des Lichtleiters auf das Mikrolinsenarray (14) fällt, oder dass die Strahlung der ersten Lichtquelle (10) über Lichtleiter zuführbar ist, deren Auskoppelenden in der ersten Objektebene des Objektivs (18) liegen.

10. Messanordnung nach zumindest einem der vorherigen Ansprüche,
**dadurch gekennzeichnet,**
**dass** das Mikrolinsenarray (14), das erste Lochmuster (30) und der erste Strahlteiler (24) als eine Baueinheit ausgebildet sind, die vorzugsweise eine Würfelgeometrie aufweist und/oder dass zwischen dem ersten Strahlteiler (24) und dem Objektiv (18) zumindest eine planparallele Platte (70, 72) angeordnet ist und dass die planparallele Platte um zwei in der von der Platte aufgespannten Ebene verlaufende Achsen drehbar ausgebildet ist.

11. Messanordnung nach zumindest einem der vorherigen Ansprüche,
**dadurch gekennzeichnet,**
**dass** der optische Weg der Messstrahlung durch Einschieben einer planparallelen Platte (56) in den Strahlengang veränderbar ist.

12. Verfahren zum Messen der Form zumindest eines Abschnitts eines Objekts, insbesondere eines semitransparenten Objekts wie zumindest Abschnitt eines Zahns, unter Verwendung einer Lichtquelle zur Erzeugung von Licht mit einem kontinuierlichem Spektrum, eine Einrichtung zur Erzeugung eines multifokalen Beleuchtungsmusters, eines Objektivs mit großer chromatischer Aberration zur Abbildung von Foki des Beleuchtungsmusters auf das Objekt, eine Detektiereinrichtung zur Ermittlung der Wellenlängenspektren der konfokal über das Objektiv auf das Objekt abgebildeten Foki, wobei aus dem jeweiligen Wellenlängenspektrum die spektrale Peaklage eines jeden Fokus bestimmt wird, aus der die Erstreckung des Objekts in Richtung des Abbildungsstrahls berechnet wird,
**dadurch gekennzeichnet,**
**dass** in der Ebene der konfokal abgebildeten Foki ein erstes Lochmuster mit ersten Löchern angeordnet wird, deren geometrische Anordnung mit der des multifokalen Beleuchtungsmusters korreliert, und dass durch die Position der ersten Löcher Positionen der Foki auf dem Objekt in einer senkrecht zum Abbildungsstrahl verlaufenden Ebene vorgegeben werden, wobei die Wellenlängenspektren der in den Löchern abgebildeten Foki gleichzeitig von der Detektiereinrichtung erfasst werden.

13. Verfahren nach Anspruch 12,
**dadurch gekennzeichnet,**
**dass** das Wellenlängenspektrum eines jeden in einem Loch abgebildeten Fokus mit einer dem ersten Lochmuster nachgeordneten dispersiven Einrichtung lateral aufgespreizt wird.

14. Verfahren nach Anspruch 12 oder 13,
**dadurch gekennzeichnet,**
**dass** die Detektiereinrichtung eine die Wellenlängenspektren erfassende Pixelfläche eines CCD-Sensors aufweist, dass die Pixelfläche und/oder die dispersive Einrichtung zu dem ersten Lochmuster derart geneigt ausgerichtet werden, dass die Wellenlängenspektren der in den ersten Löchern abgebildeten Foki überlappungsfrei auf der Pixelfläche auftreffen, wobei vorzugsweise die Pixelfläche und/oder die dispersive Einrichtung zu dem ersten Lochmuster derart geneigt ausgerichtet werden, dass die Wellenlängenspektren der in den ersten Löchern abgebildeten Foki pixelfrei ineinander übergehen.

15. Verfahren nach zumindest einem der Ansprüche 12 bis 14,
**dadurch gekennzeichnet,**
**dass** von einem Fokus ein erstes Spektrum ermittelt wird, das in den Strahlengang des Fokus ein Weglänge des Strahlengangs änderndes optisches Element angeordnet wird, dass von dem Fokus mit geändertem Strahlengang ein zweites Spektrum ermittelt wird, dass die Spektren voneinander subtrahiert werden und dass aus sich ergebenden gleichen Peaks unterschiedlichen Vorzeichens die Wellenlänge der Strahlung des Fokus ermittelt wird, wobei insbesondere der spektrale Verlauf des Untergrunds des Spektrums des Fokus durch Ermittlung von Spektren von in den ersten Löchern zugeordneten zweiten Löchern auftreffendem Licht ermittelt wird, wobei die Anordnung der zweiten Löcher von der des multifokalen Beleuchtungsmusters abweicht.

16. Verfahren nach zumindest einem der Ansprüche 12 bis 15,
**dadurch gekennzeichnet,**
**dass** Spektren von Licht mehrerer einem ersten Loch zugeordneter zweiter Löcher zur Untergrundermittlung gemittelt werden.

17. Verfahren nach zumindest einem der Ansprüche 12 bis 16,
**dadurch gekennzeichnet,**
**dass** zur Messung des vorzugsweise intraoral zu messenden Objekts nacheinander Teilbereiche des Objekts gemessen werden, wobei aufeinander folgende Teilbereiche einen gemeinsamen Unterteilbereich umfassen, der 50 % bis 95 % des Teilbereichs beträgt, wobei insbesondere zur Ermittlung der Form des zumindest einen Abschnitts des Objekts die Teilbereiche nacheinander mit einer Bildfolge zwischen 25 und 50 Bildern pro Sekunde aufgenommen werden und gegebenenfalls zur Abbildung der Teilbereiche eine zwischen dem Objekt und dem Objektiv angeordnete Umlenkeinrichtung verstellt wird, wobei vorzugsweise zur Abbildung der Teilbereiche die Umlenkeinrichtung mit dem Objekt als Einheit verstellt oder zur Ermittlung der Teilbereiche das multifokale Beleuchtungsmuster verstellt wird, mit dem synchron das erste Lochmuster verstellt wird.

18. Verfahren nach zumindest einem der Ansprüche 12 bis 17,
**dadurch gekennzeichnet,**
**dass** über eine Bilderfassungseinrichtung, wie ein CCD-Chip, das Objekt abgebildet wird, wobei zur Abbildung ein Spektralbereich ausgewählt wird, in dem das auf dem Objekt abgebildete Beleuchtungsmuster unscharf abgebildet wird.

## Claims

1. A measuring arrangement for the three-dimensional measuring of at least a part of an object (28), in particular a semi-transparent object, comprising a first light source (10) with a continuous spectrum, preferably comprising and consisting of a halogen lamp or white-light LEDs or several coloured LEDs, a device (14) for generating a multi-focal illumination pattern (16), an objective lens (18) with high chromatic aberration to image foci of the illumination pattern onto the object, a detector device (40), such as a CCD area detector, for determining the wavelength spectra of the foci imaged confocally onto the object by the objective lens, as well as a spectrum-dispersing device (34, 36, 38) that is arranged between the confocally imaged foci and the detector device, **characterized in that**
in the plane of the confocally imaged foci is arranged a first matrix of holes (30) with first holes (32), whereby the geometric arrangement of the first holes corresponds to the geometric arrangement of the foci of the multi-focal illumination pattern.

2. The measuring arrangement according to claim 1,
**characterized in that**
the dispersing device (34, 36, 38) comprises an optical system that images the foci imaged in the first holes (32) onto the detector device (40), with a dispersing element, such as a prism, that laterally spreads the respective spectrum of every focus, whereby the imaging optical system preferably comprises two optical systems (34, 36), such as lenses or lens systems, with the dispersing element (38) positioned in between them.

3. The measuring arrangement according to claim 1 or 2
**characterized in that**
the detector device (40) comprises pixels of a CCD area sensor which are arranged in an area, and that the spectrum-dispersing device (34, 36, 38) is arranged relative to the first matrix of holes (30) and/or the detector device is arranged relative to the dispersing device in such a manner that the laterally spread spectra impact the pixel surface without overlap, whereby in particular the spread spectra impact on the pixel surface in such a manner, that consecutive laterally spread spectra merge in a pixel-free manner.

4. The measuring arrangement according to at least one of the preceding claims,
**characterized in that**
arranged after the light source (10) in the first focus plane of the objective lens (18) which extends on the light-source-side, is a micro-lens array (14) for generating the multi-focal illumination pattern (16), whereby preferably in the first focal plane of the objective lens (18) is arranged a second matrix of holes, in whose holes the foci of the multi-focal illumination pattern can be imaged or whose holes define the multi-focal illumination pattern.

5. The measuring arrangement according to at least one of the preceding claims,
**characterized in that**
the measuring arrangement comprises a second light source (64) illuminating the object (28), whereby in particular spectral range of the second light source (64) is outside of the wavelength range of the first light source (10), which essentially can be evaluated to acquire the shape of the object (28).

6. The measuring arrangement according to at least one of the preceding claims,
**characterized in that**
between the objective lens (28) and the detector device (40) is arranged a first beam splitter (24) that deflects radiation onto the first matrix of holes (30), whereby preferably between the first beam splitter (24) and the objective lens (18) is arranged a second beam splitter (66), through which radiation of the second light source (64) imaging the object (28) can be imaged onto an acquisition device (62) which is in particular a camera, and whereby in particular the second beam splitter (66), such as a dichroic filter, is of an optical design that ensures high transmission for the radiation for the confocal imaging of the foci and high reflection for the radiation of the second light source (64).

7. The measuring arrangement according to at least one of the preceding claims,
**characterized in that**
the first matrix of holes (30) comprises second holes (54), which are associated with the first holes (32) and are intended for determining the background of measuring results.

8. The measuring arrangement according to at least one of the preceding claims,
**characterized in that**
between the objective lens (18) and the object (28) is arranged a beam-deflecting device (26), whereby in particular the objective lens (18) with the beam-deflecting device (26) is a section of the measuring arrangement to be used intraorally, whereby preferably the deflection device (26), such as a deflection mirror, is embodied to be moveable and/or tiltable.

9. The measuring arrangement according to at least one of the preceding claims,
**characterized in that**
the radiation of the first light source (10) can be fed through fibre-optic light guides, whose output ends are located in the focus plane of a collimating optical system (12), or that the radiation of the first light source (10) can be fed through fibre-optic light guides, whose output ends are located in the first object plane of the objective lens (18) and, thus, themselves form the foci of the illumination pattern instead of the foci of the micro-lens array, or that the radiation of the first light source (10) can be fed through one or several fibre-optic light guides, whose output end is located in the focus plane of a collimating optical system (12), behind which the collimated beam of the fibre-optic light guide impinges on the micro-lens array (14), or that the radiation of the first light source (10) can be fed through fibre-optic light guides with output ends positioned in the first object plane of the objective lens (18).

10. The measuring arrangement according to at least one of the preceding claims,
**characterized in that**
the micro-lens array (14), the first matrix of holes (30), and the first beam splitter (24) are embodied as a unit, which preferably possesses a cube-shaped geometry, and/or that between the first beam splitter (24) and the objective lens (18) is arranged at least one plane-parallel plate (70, 72), and that the plane-parallel plate is embodied rotatable about two axes running in the plane defined by the plate.

11. The measuring arrangement according to at least one of the preceding claims,
**characterized in that**
the optical path of the measurement radiation can be changed by inserting a plane-parallel plate (56) into the optical path.

12. A method for measuring the shape of at least a section of an object, in particular a semi-transparent object, such as at least section of a tooth, utilizing a light source to generate light with a continuous spectrum, a device for generating a multi-focal illumination pattern, an objective lens with high chromatic aberration for imaging foci of the illumination pattern onto the object, a detector device to determine the wavelength spectra of the foci imaged confocally onto the object by the objective lens, whereby the spectral peak position of every focus is determined from the respective wavelength spectrum, from said peak position the extent of the object along the direction of the imaging beam is computed,
**characterized in that**
in the plane of the confocally imaged foci is arranged a first matrix of holes with first holes, whose geometric arrangement correlates with the arrangement of the multi-focal illumination pattern, and that the positions of the first holes define positions of the foci on the object in a plane extending normal relative to the imaging beam, whereby the wavelength spectra of the foci imaged in the holes are simultaneously acquired by the detector device.

13. The method according to claim 12,
**characterized in that**
the wavelength spectrum of every single focus imaged in a hole is laterally spread using a dispersing device arranged downstream of the first matrix of holes.

14. The method according to claim 12 or 13,
**characterized in that**
the detector device comprises a pixel area of a CCD sensor acquiring the wavelength spectra, that the pixel area and/or the dispersing device are arranged relative to the first matrix of holes with such an inclination that the wavelength spectra of the foci imaged in the first holes impact the pixel surface without any overlap, whereby preferably the pixel surface and/or the dispersing device are arranged at an inclination relative to the first matrix of holes in such a manner that the wavelength spectra of the foci imaged in the first holes merge in a pixel-free manner.

15. The method according to at least one of the claims 12 to 14,
**characterized in that**
a first spectrum is determined from a focus, that an optical element that changes the path length of the beam path is arranged in the optical path of the focus, that a second spectrum is determined from the focus with changed beam path, that the spectra are subtracted from each other, and that from the resulting equal peaks with opposite sign one determines the wavelength of the radiation of the focus, whereby in particular the spectral curve of the background of the spectrum of the focus is determined by determining spectra of light impinging on second holes associated with the first holes, whereby the arrangement of the second holes deviates from the arrangement of the multi-focal illumination pattern.

16. The method according to at least one of the claims 12 to 15,
**characterized in that**
spectra of light of several second holes associated with a first hole are averaged for the purpose of determining the background.

17. The method according to at least one of the claims 12 to 16,
**characterized in that**
for measuring the object, which preferably should be measured intraorally, sections of the object are measured one after the other, whereby subsequent sections possess a common subsection that constitutes between 50% and 95% of the size of the section, whereby in particular for determining the shape of the at least one part of the object, the sections are recorded subsequently with a frame rate of between 25 and 50 images per second and, if necessary, for the purpose of imaging the sections, a deflecting device that is arranged between the object and the objective lens is moved, whereby preferably for imaging the sections, the deflecting device and the object are moved as a unit, or for determining the sections, the multi-focal illumination pattern is moved, with which the first matrix of holes is moved synchronously.

18. The method according to at least one of the claims 12 to 17,
**characterized in that**
the object is imaged via an image-acquisition device, such as a CCD chip, whereby for the imaging a spectral region is selected, in which the illumination pattern imaged on the object is imaged out of focus.

## Revendications

1. Dispositif de mesure destiné à la mesure tridimensionnelle d'au moins une partie d'un objet (28), en particulier d'un objet semi-transparent, ledit dispositif comprenant une première source lumineuse (10) à spectre continu, laquelle comprend de préférence une lampe à halogène ou des LED à lumière blanche ou plusieurs LED de couleurs et est constituée de ladite lampe ou desdites LED, un dispositif (14) destiné à générer une configuration d'éclairage (16) multifocal, un objectif (18) à grande aberration chromatique pour la reproduction des foyers de la configuration d'éclairage sur l'objet, un dispositif détecteur (40), tel qu'un détecteur à jonction CCD, pour la détermination des spectres de longueurs d'onde des foyers reproduits sur l'objet de manière confocale par l'objectif, ainsi qu'un dispositif de dispersion spectrale (34, 36, 38) monté entre les foyers reproduits de manière confocale et le dispositif détecteur,
**caractérisé en ce**
**que** dans le plan des foyers reproduits de manière confocale est placé une première configuration de trous (30) avec des premiers trous (32), sachant que l'agencement géométrique desdits premiers trous correspond à l'agencement géométrique desdits foyers de la configuration d'éclairage multifocal.

2. Dispositif de mesure selon la revendication 1,
**caractérisé en ce**
**que** le dispositif de dispersion (34, 36, 38) comprend un système optique reproduisant sur le dispositif détecteur (40) les foyers reproduits dans les premiers trous (32) et doté d'un élément dispersif, tel qu'un prisme, dispersant latéralement le spectre respectif de chaque foyer, sachant que le système optique reproduisant comprend de préférence deux moyens optiques (34, 36), tels que des lentilles ou un système de lentilles, avec l'élément dispersif (38) placé entre lesdits moyens.

3. Dispositif de mesure selon la revendication 1 ou 2,
**caractérisé en ce**
**que** le dispositif détecteur (40) comprend des pixels disposés dans une surface d'un capteur à jonction CCD et que le dispositif de dispersion spectrale (34, 36, 38) est disposé par rapport à la première configuration de trous (30) et/ou que le dispositif détecteur est disposé par rapport au dispositif de dispersion de manière telle que les spectres dispersés latéralement rencontrent la surface de pixels sans chevauchement, sachant en particulier que les spectres dispersés rencontrent la surface de pixels de sorte que des spectres successifs dispersés latéralement se fondent les uns dans les autres sans pixel.

4. Dispositif de mesure selon au moins une des revendications précédentes,
**caractérisé en ce**
**qu'**est placé en aval de la première source lumineuse (10) un arrangement de microlentilles (14) pour générer la configuration d'éclairage multifocal (16) dans le premier plan focal de l'objectif (18) s'étendant du côté de la source lumineuse, sachant que de préférence dans le premier plan focal de l'objectif (18) est placé une deuxième configuration de trous, dans les trous duquel les foyers de la configuration d'éclairage multifocal peuvent être reproduits, ou dont la configuration d'éclairage multifocal définit les trous.

5. Dispositif de mesure selon au moins une des revendications précédentes,
**caractérisé en ce**
**que** le dispositif de mesure présente une deuxième source lumineuse (64) éclairant l'objet (28), sachant qu'en particulier le domaine spectral de ladite deuxième source lumineuse (64) se situe en dehors de la gamme de longueurs d'ondes de la première source lumineuse (10), laquelle gamme est pour l'essentiel exploitable pour la saisie de la forme de l'objet (28).

6. Dispositif de mesure selon au moins une des revendications précédentes,
**caractérisé en ce**
**qu'**entre l'objectif (18) et le dispositif détecteur (40) est placé un premier diviseur de faisceau (24) déviant un rayonnement sur la première configuration de trous (30), sachant que de préférence entre le premier diviseur de faisceau (24) et l'objectif (18) est placé un deuxième diviseur de faisceau (66), au moyen duquel le rayonnement de la deuxième source lumineuse (64) reproduisant l'objet (28) est reproductible sur un dispositif d'acquisition (62), qui est en particulier une caméra, et sachant qu'en particulier le deuxième diviseur de faisceau (66), tel qu'un filtre dichroïque, est optiquement conçu de manière à obtenir une haute transmission pour le rayonnement destiné à la reproduction confocale des foyers, et une haute réflexion pour le rayonnement de la deuxième source lumineuse (64).

7. Dispositif de mesure selon au moins une des revendications précédentes,
**caractérisé en ce**
**que** la première configuration de trous (30) présente des deuxièmes trous (54) associés aux premiers trous (32) et destinés à la détermination du fond des résultats de mesures.

8. Dispositif de mesure selon au moins une des revendications précédentes,
**caractérisé en ce**
**qu'**entre l'objectif (18) et l'objet (28) est disposé un dispositif déviateur de rayon (26), sachant qu'en particulier l'objectif (18) avec le dispositif déviateur de rayon (26) est une partie à usage intraoral du dispositif de mesure, et que de préférence le dispositif déviateur (26), tel qu'un miroir de déviation, est conçu coulissant et/ou basculant.

9. Dispositif de mesure selon au moins une des revendications précédentes,
**caractérisé en ce**
**que** le rayonnement de la première source lumineuse (10) peut être guidé par des conducteurs optiques dont les extrémités de sortie sont situées dans le plan focal d'un module optique de collimation (12), ou que le rayonnement de la première source lumineuse (10) peut être guidé par des conducteurs optiques dont les extrémités de sortie sont situées dans le premier plan objet de l'objectif (18) et constituent ainsi elles-mêmes les foyers de la configuration d'éclairage au lieu des foyers de l'arrangement de microlentilles, ou que le rayonnement de la première source lumineuse (10) peut être guidé par un ou plusieurs conducteur(s) optique(s) dont la/les extrémité(s) de sortie est/sont située(s) dans le plan focal d'un module optique de collimation (12), après lequel le rayon collimaté du conducteur optique rencontre l'arrangement de microlentilles (14), ou que le rayonnement de la première source lumineuse (10) peut être guidé par des conducteurs optiques dont les extrémités de sortie sont situées dans le premier plan objet de l'objectif (18).

10. Dispositif de mesure selon au moins une des revendications précédentes,
**caractérisé en ce**
**que** l'arrangement de microlentilles (14), la première configuration de trous (30) et le premier diviseur de faisceau (24) sont conçus en tant qu'unité modulaire qui présente de préférence une géométrie cubique, et/ou qu'entre le premier diviseur de faisceau (24) et l'objectif (18) est placée au moins une plaque à faces planes et parallèles (70, 72) et que la plaque à faces planes et parallèles est conçue mobile en rotation autour de deux axes s'étendant dans le plan engendré par ladite plaque.

11. Dispositif de mesure selon au moins une des revendications précédentes,
**caractérisé en ce**
**que** le chemin optique du rayonnement de mesure peut être modifié par introduction d'une plaque à faces planes et parallèles (56) dans la trajectoire du faisceau.

12. Procédé destiné à la mesure d'au moins une partie d'un objet, en particulier d'un objet semi-transparent tel qu'au moins une partie d'une dent, en utilisant une source lumineuse pour générer une lumière à spectre continu, un dispositif pour générer une configuration d'éclairage multifocal, un objectif à grande aberration chromatique pour la reproduction de foyers de la configuration d'éclairage sur l'objet, un dispositif détecteur pour la détermination des spectres de longueurs d'onde des foyers reproduits sur l'objet de manière confocale par l'objectif, sachant qu'à partir de chaque spectre de longueurs d'onde est déterminée la pointe spectrale de chaque foyer, à partir de laquelle est calculée l'extension de l'objet dans la direction du rayon de reproduction,
**caractérisé en ce**
**que** dans le plan des foyers reproduits de manière confocale est disposé une première configuration de trous avec des premiers trous, dont l'agencement géométrique est en corrélation avec celui de la configuration d'éclairage multifocal, et que par la position des premiers trous sont définies des positions des foyers sur l'objet dans un plan s'étendant perpendiculairement au rayon de reproduction, sachant que les spectres de longueurs d'onde des foyers reproduits dans les trous sont simultanément saisis par le dispositif détecteur.

13. Procédé selon la revendication 12,
**caractérisé en ce**
**que** le spectre de longueurs d'onde de chaque foyer reproduit dans un trou est dispersé latéralement avec un dispositif de dispersion placé en aval de la première configuration de trous.

14. Procédé selon la revendication 12 ou 13,
**caractérisé en ce**
**que** le dispositif détecteur présente une surface de pixels d'un capteur CCD enregistrant les spectres de longueurs d'onde, que la surface de pixels et/ou le dispositif de dispersion est/sont incliné(e)(s) par rapport à la première configuration de trous de manière telle que les spectres de longueurs d'onde des foyers reproduits dans les premiers trous rencontrent sans chevauchement la surface de pixels, sachant que de préférence la surface de pixels et/ou le dispositif de dispersion est/sont incliné(e)(s) par rapport à la première configuration de trous de manière telle que les spectres de longueurs d'onde des foyers reproduits dans les premiers trous se fondent les uns dans les autres sans pixel.

15. Procédé selon au moins une des revendications 12 à 14,
**caractérisé en ce**
**qu'**un premier spectre d'un foyer est déterminé, que dans la trajectoire du faisceau du foyer est placé un élément optique modifiant une longueur de la trajectoire du faisceau, qu'est déterminé un deuxième spectre du foyer dont la trajectoire du faisceau est modifiée, que les spectres sont soustraits l'un de l'autre et que la longueur d'onde du rayonnement du foyer est déterminée à partir des pointes identiques de signes différents qui en résultent, sachant qu'en particulier l'allure spectrale du fond du spectre du foyer est déterminée par détermination de spectres d'une lumière incidente dans des deuxièmes trous associés aux premiers trous, sachant que l'agencement des deuxièmes trous est différent de celui de la configuration d'éclairage multifocal.

16. Procédé selon au moins une des revendications 12 à 15,
**caractérisé en ce**
**qu'**est calculée la moyenne des spectres de la lumière de plusieurs deuxièmes trous associés à un premier trou afin de déterminer le fond.

17. Procédé selon au moins une des revendications 12 à 16,
**caractérisé en ce**
**que** pour la mesure de l'objet à mesurer de préférence de manière intraorale, des zones partielles de l'objet sont successivement mesurées, sachant que les zones partielles successives comprennent une zone partielle inférieure commune représentant 50 % à 95 % de ladite zone partielle, sachant qu'en particulier pour déterminer la forme de l'au moins une partie de l'objet, les zones partielles sont enregistrées l'une après l'autre avec une cadence d'images comprise entre 25 et 50 images par seconde, et que le cas échéant pour reproduire lesdites zones partielles, un dispositif déviateur placé entre l'objet et l'objectif est ajusté, sachant que de préférence pour reproduire lesdites zones partielles, le dispositif déviateur est ajusté en tant qu'unité avec l'objet ou que pour déterminer les zones partielles, la configuration d'éclairage multifocal est ajustée, avec laquelle la première configuration de trous est ajustée en synchronisme.

18. Procédé selon au moins une des revendications 12 à 16,
**caractérisé en ce**
**que** l'objet est reproduit au moyen d'un dispositif d'acquisition d'images tel qu'une puce CCD, sachant que pour la reproduction est sélectionné un domaine spectral à l'intérieur duquel la configuration d'éclairage reproduite sur l'objet est reproduite de manière floue.
